# EUROPEAN PATENT SPECIFICATION

(11) **EP 2 369 655 B1**
(45) Date of publication and mention of the grant of the patent: **30.10.2013**
(21) Application number: 10176666.5
(22) Date of filing: 14.09.2010
(51) Int. Cl.: H01M 2/02, H01M 2/10

(54) **Power pack removal device for a portable electronic device**
Netzteilentfernungsvorrichtung für tragbare elektronische Vorrichtungen
Dispositif de suppression de bloc d'alimentation pour dispositif électronique portable

(30) Priority: 15.03.2010 US 314086 P
(43) Date of publication of application: 28.09.2011
(73) Proprietor: BlackBerry Limited, Waterloo, ON N2L 3W8 (CA)
(72) Inventor: IGNOR Matthew, Michael, Waterloo Ontario N2L 3W8 (CA); KANOLD Peter, Carl, Waterloo Ontario N2L 3W8 (CA); LAMERS Ramon, 44799, Bochum (DE)
(74) Representative: MERH-IP Matias Erny Reichl Hoffmann

(56) References cited:
- DE-U1-202006 002 212
- JP-A- 2009 187 811
- US-A1- 2007 052 389
- US-B1- 7 267 550

## Description

### Technical Field

The present disclosure relates to removable power packs for portable electronic devices.

### Background

Portable electronic devices such as smart phones, personal data assistants (PDAs), handheld computers, two-way pagers, music players and cellular telephones, for example, are typically powered by power packs, such as rechargeable batteries. Often, the devices include a removable power pack that is electrically connected to the device. Access to the power pack is typically provided via a cover that is physically coupled to a housing of the portable electronic device.

Certain operations require a user to remove the power pack. For example, if the user wishes to change a SIM (Subscriber Identity Module) card, replace the power pack, change a microSD card, obtain serial number information and/or reset the portable electronic device. Resetting of the device may be done for testing purposes or to resolve issues such as sluggish or frozen device, radio coverage problems or email problems, for example.

In order to remove the power pack, a user typically removes the cover and removes the power pack from a power pack-receiving cavity. Because the power pack may be wedged tightly in the cavity, removal can be difficult and the user may find it difficult to remove the power pack without using a tool of some sort. Some power packs include recesses that are sized to receive fingernails for facilitating removal. The recesses are sometimes effective, however, reduce the overall size of the power pack, which may reduce the charge or the energy that the power pack can hold.

JP 2009 187811 A discloses a packed battery including a unit battery and an outer package case. A label having a pull tab is coupled to the packed battery.

US 7,267,550 B1 discloses a printed circuit board (PCB) having receiving means (guide rails) for receiving an on-board battery. The battery includes a pull tab that is gripped when removing the battery. A cam lever is used to disengage the battery from the PCB. The pull tab facilitate axial removal of the battery and is not part of a label.

DE 20 2006 002212 U1 discloses a label wrapped around a cylindrical battery with a pull tab extending from the label. The pull tab appears to be accessible through an aperture to facilitate removal of the cylindrical battery positive end first.

### Summary

There is provided herein a device including: a power pack body comprising a pair of opposed surfaces separated by sides having a thickness and a terminal plate as it is defined in claim 1.

The device also comprises a label including: a label body and a pull tab as defined in claim 1.

### Drawings

The following figures set forth embodiments in which like reference numerals denote like parts. Embodiments are illustrated by way of example and not by way of limitation in the accompanying figures.

Figure 1 is a block diagram of a portable electronic device according to an embodiment;

Figure 2 is a rear view of the portable electronic device of Figure 1;

Figure 3 is an isometric view of a battery pack including a label of the portable electronic device of Figures 1 and 2;

Figure 4 is another isometric view of the battery pack including the label of Figure 3 in which a portion of the label is cut away;

Figure 5 an isometric view of a label according to an embodiment and a detail of a portion of the label;

Figure 6A is a plan top view of the label of Figure 5 prior to assembly;

Figure 6B is a plan bottom view of the label of Figure 5 prior to assembly;

Figure 7 is an isometric rear view of the portable electronic device of Figures 1 and 2 in which a battery cover is removed;

Figure 8 is an isometric view of a battery pack including a label according to another embodiment;

Figure 9 is another isometric view of the battery pack including the label of Figure 8;

Figure 10 is an isometric rear view of another portable electronic device including the battery pack and label of Figure 8 according to another embodiment;

Figure 11 is an isometric view similar to Figure 10 showing the battery pack and label removed from the portable electronic device;

Figure 12 is a perspective view of another embodiment of a label applied to a battery pack.

### Detailed Description

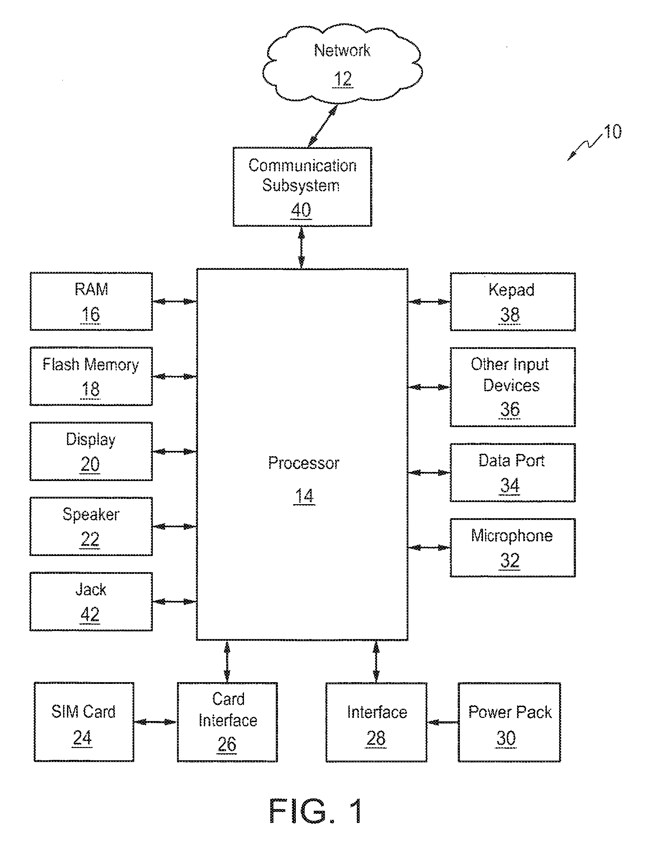

Referring to Figure 1, components of an illustrative portable electronic device 10 according to an embodiment are generally shown. The portable electronic device 10 includes data communication capabilities and may communicate with other electronic devices directly or through a wireless network. The portable electronic device 10 is based on the computing environment and functionality of a handheld computer, such as a wireless personal digital assistant (PDA), for example. It will be understood, however, that the portable electronic device 10 is not limited to a wireless personal digital assistant. Other portable electronic devices are possible, such as cellular telephones, smart telephones, electronic messaging devices, music players, gaming devices, remote controls and laptop computers, for example.

The portable electronic device 10 includes a number of components including a processor 14, which controls the overall operation of the device 10. A communication subsystem 40 controls data and voice communication functions, such as email, PIN (Personal Identification Number) message functions, SMS (Short Message Service) message functions and cellular telephone functions, for example. The communication subsystem 40 is in communication with a wireless network 12, which may be a data-centric wireless network, a voice-centric wireless network or a dual-mode wireless network.

In Figure 1, the communication subsystem 40 is a dual-mode wireless network that supports both voice and data communications. The communication subsystem 40 is configured in accordance with the Global System for Mobile Communication (GSM) and General Packet Radio Services (GPRS) standards. The communication subsystem 40 may alternatively be configured in accordance with Enhanced Data GSM Environment (EDGE) or Universal Mobile Telecommunications Service (UMTS) standards. Other wireless networks may also be associated with the portable electronic device 10, including Code Division Multiple Access (CDMA) or CDMA2000 networks. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems.

The wireless network 12 includes base stations (not shown) that provide a wireless link to the portable electronic device 10. Each base station defines a coverage area, or cell, within which communications between the base station and the portable electronic device 10 can be effected. It will be appreciated that the portable electronic device 10 is movable within the cell and can be moved to coverage areas defined by other cells. Data is delivered to the portable electronic device 10 via wireless transmission from the base station. Similarly, data is sent from the portable electronic device 10 via wireless transmission to the base station.

The communication subsystem 40 further includes a short range communications function, which enables the device 10 to communicate directly with other devices and computer systems without the use of the wireless network 12 through infrared or Bluetooth™ technology, for example.

Prior to the portable electronic device 10 being able to send and receive communication signals over the wireless network 12, network registration or activation procedures typically have been completed. In order to enable network communication, a SIM (Subscriber Identity Module) card 24 is inserted into a card interface 26. The SIM card, or Removable User Identity Module card, is used to identify the user of the mobile device, store personal device settings and enable access to network services, such as email and voice mail, for example, and is not bound to a particular portable electronic device 10.

The processor 14 is also connected to a Random Access Memory (RAM) 16 and a flash memory 18. An operating system and device software are typically stored in flash memory 18 and are executable by the processor 14. Some device software components may alternatively be stored in RAM 16. The portable electronic device 10 includes computer executable programmed instructions for directing the portable electronic device 10 to implement various applications. Some examples of applications that may be stored on and executed by the device 10 include: electronic messaging, games, calendar, address book and music player applications. Software applications that control basic device operation, such as voice and data communication, are typically installed during manufacture of the device 10. For devices that do not include a SIM card 24, user identification information may be programmed into the flash memory 18. The flash memory 18 may alternatively be a persistent storage, a Read-Only Memory (ROM) or other non-volatile storage.

The processor 14 receives input from various input devices including a keypad 38 and other input devices 36. The keypad 38 may be a complete alphanumeric keypad or telephone-type keypad. The other input devices 36 may replace or complement the keypad 38 to facilitate input and may include devices such as: single or multi-function buttons, a touch screen, a mouse, a trackball, a capacitive touch sensor or a roller wheel with dynamic button pressing capability. The portable electronic device 10 of Figure 1 is shown by way of example and it will be appreciated by a person skilled in the art that many different device types, shapes and input device configurations are possible.

The processor 14 outputs to various output devices including an LCD display screen 20. A microphone 32 and speaker 22 are connected to the processor 14 for cellular telephone functions. A data port 34 is connected to the processor 14 for enabling data communication between the portable electronic device 10 and another computing device. The data port 34 may include data lines for data transfer and a supply line for charging a power pack 30 of the portable device 10. Interface 28 allows for electrical communication between the power pack 30 and the processor 14.

The portable electronic device 10 is operable in a data communication mode and a voice communication mode. In the data communication mode, a received data signal representing information such as a text message, an email message, a media file to be transferred, or web page download is processed by the communication subsystem 40 and input to the processor 14. The processor 14 further processes the signal and renders images for display on the display screen 20. Alternatively, the processed signals may be output to another computing device through the data port 34. In order to transmit information in the data communication mode, the user of the portable electronic device 10 composes information for transmission, such as email messages, for example, using the keypad 38 and other input devices 36 in conjunction with the display screen 20. The composed information is transmitted through the communication subsystem 40 over the wireless network 12 or via short range communications. Operation of the portable electronic device 10 in the voice communication mode is similar to the data communication mode, however, the received signals are output to the speaker 22, or an auxiliary device such as a headset or headphones, and signals for transmission are generated by the microphone 32. The portable electronic device 10 may also include other voice subsystems, such as a voice message recording subsystem, for example. Audio jack 42 is provided for receiving an audio accessory such as headphones, a headset, amplified speakers or amplified headphones, for example. Audio jack 42 may also receive other accessories such as a multi-media accessory including play, pause, stop and rewind buttons or a TV-out accessory that allows for connection of the portable electronic device to a TV, for example.

Only a limited number of device subsystems have been described. It will be appreciated by a person skilled in the art that additional subsystems corresponding to additional device features may also be connected to the processor 14. Further, although many subsystems that use electrical power have been described, the concepts described herein may be applicable to devices that include subsystems that use electrical power, even if such subsystems have not been specifically described.

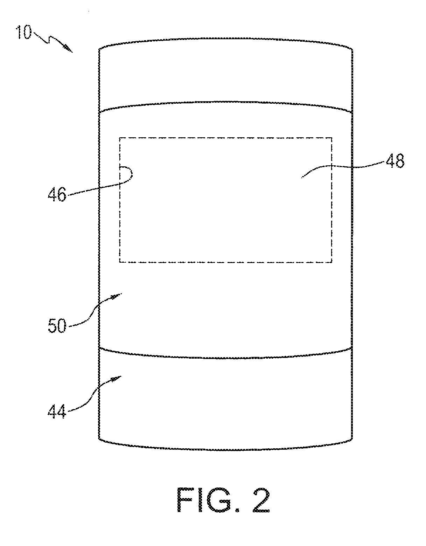

Referring to Figure 2, components of the portable electronic device 10 are provided in a housing 44. The housing 44 includes a cavity 46 for receiving a power pack 30. The power pack may be any removable source of electrical power for the portable electronic device 10 or any component thereof. The power pack may include, for example, one or more battery cells. Battery cells may store energy chemically, and the concept is not limited to any particular battery chemistry. The power pack 30 may include a fuel cell or a fuel supply for a fuel cell, or a component of a fuel cell system. For purposes of the discussion that follows, the power pack may be conveniently illustrated and referred to as a typical embodiment, and accordingly will be referred to as a battery pack 48. The battery pack 48 is accessible through a cover (or battery cover) 50.

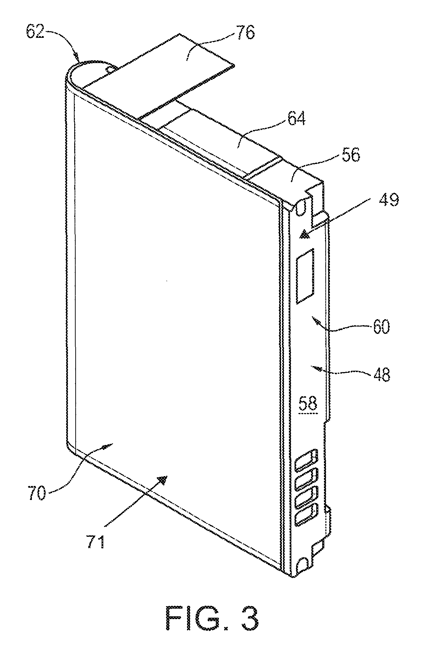

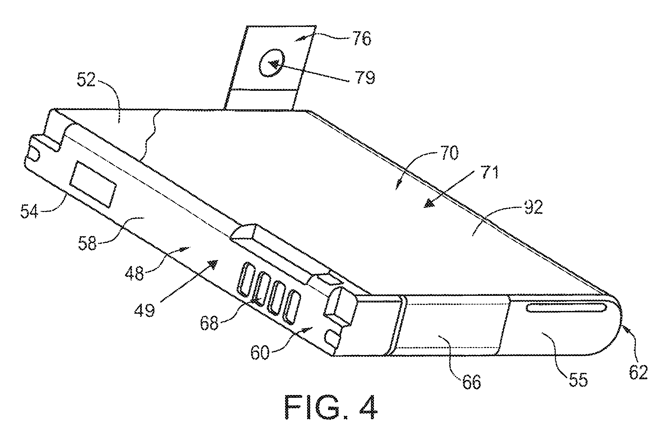

Referring to Figures 3 and 4, the battery pack 48 is a stripped down, or bare, cell with an added thin protective coating. The protective coating may be a polymer or plastic coating or sheathing, for example. The battery pack 48 includes a battery pack body (or power pack body) 49, which stores or supplies energy (or both) chemically or in another form. The battery pack body 49 typically accounts for a substantial amount of the volume and mass of the power pack as a whole and is generally cuboid-shaped (or roughly parallelepiped-shaped, with a length, width and thickness) having a flattened cross-section and a pair of opposed surfaces: an underside surface 54 and an exposed surface 52. The opposed surfaces 52, 54, a first side 62 and ends 55, 56 of the cell are enveloped by the protective coating. A terminal plate 58 is provided on a second side 60 of the battery pack 48 opposite the first side 62, which is rounded. The terminal plate 58 covers part (or perhaps all) of a printed circuit board (not shown) that contains terminals 68 for electrically connecting the battery pack 48 to the battery interface 28 to provide power to the portable electronic device 10. The terminal plate 58 may also affix the printed circuit board to other components of the battery pack 48 or may otherwise hold the printed circuit board in place. In some cases, the printed circuit board with terminals 68 may be a unitary structure, and in other cases, these may be made of two or more discrete structures. The terminals 68 electrically connect the battery pack 48 to provide power from the battery pack body 49 to the portable electronic device 10. In one embodiment, the terminals 68 include: a negative power terminal, a battery temperature terminal, a battery identification terminal and a positive power terminal.

When installed in the portable electronic device 10, the battery pack 48 is oriented such that underside surface 54 faces the cavity 46 and exposed surface 52 can be seen by the user when the battery cover 50 is removed. In addition, the terminals 68 contact mating terminals (not shown) of the interface 28 in the cavity 46.

A label 70 having a pull tab 76 and a pair of securing tabs 64, 66 is adhered to the battery pack 48. The label 70 includes a label body 71 having a front portion 92, which is physically coupled to the exposed surface 52 adjacent to the battery cover 50, and a back portion 94, which is coupled to the underside surface 54. In general, components are physically coupled when they are attached to one another, directly or indirectly. Coupled components include components that are joined together as well as components that are parts of a unitary structure. Such coupling may be, but need not be, permanent. The label 70 is foldable at designated bending areas to wrap around the battery pack 48, as shown. In the embodiment of Figures 3 and 4, the pull tab 76 is provided at the first end 56 near first side 62 of the battery pack 48. In general, the label body 71 is sized to fit the battery pack 48. For a battery pack that is roughly parallelepiped-shaped, the label body 71 may be roughly rectangular.

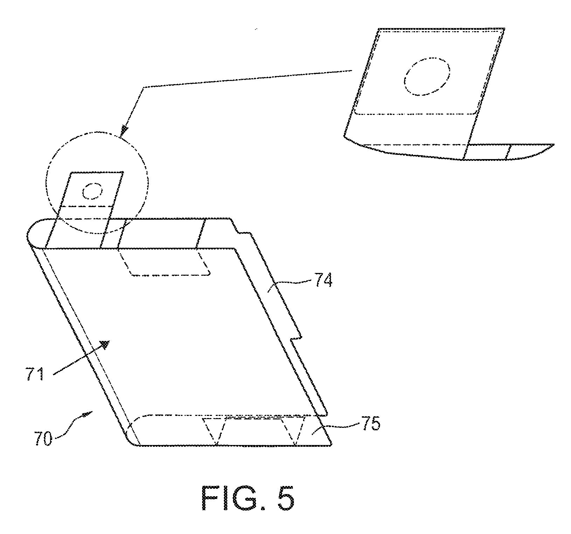

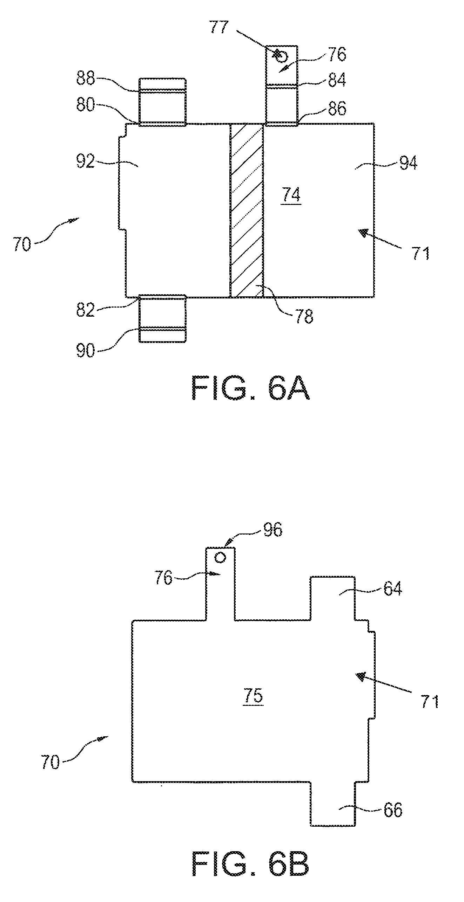

Referring also to Figure 5, the label 70 is continuous and cut from a single piece of material having a first side 74 and a second side 75. The first side 74, which is shown in Figure 6A, faces away from the battery pack 48 and may include information or graphics printed thereon. The second side 75, which is shown in Figure 6B, is in contact with the battery pack 48 and may include an adhesive to fix the label body 71 to the first side 62 and opposed surfaces 52, 54 of the battery pack 48.

In one embodiment the adhesive is applied to the label 70 during manufacture. In another embodiment, the label 70 is manufactured without an adhesive and the adhesive is applied to the battery pack 48 and label 70 at the time of installation. The label 70 may be adhesively coupled to the battery pack body 49 in any fashion. The adhesive may be any kind of adhesive, including but not limited to glue, wax, plastic, or any combination thereof.

The label 70 is foldable at a label bending area 78, which is provided between front portion 92 and back portion 94. The securing tabs 64, 66, are foldable at first bending areas 80, 88 and second bending areas 82, 90, respectively. The pull tab 76 is foldable at first and second pull tab bending areas 84, 86 and may include an aperture 77.

The pull tab 76 forms part of the back portion 94 of the label 70. This ensures that when the label 70 is applied to the battery pack 48 and a user pulls on the pull tab 76 to remove the battery pack 48 from the portable electronic device 10, the back portion 94 of the label 70 is pulled toward the battery pack 48. As such, the pull tab 76 of the label 70 facilitates removal of the battery pack 48 without pulling the label 70 away from the battery pack 48 and relying on the integrity of the adhesive between the label 70 and the battery pack 48. This reduces the likelihood of any damage to the label 70 occurring.

In one embodiment, the label 70 is made of polyester having a thickness of approximately 0.1 mm and includes an acrylic pressure sensitive adhesive applied to the second side thereof. The polyester is printable with artwork, instructions, logos or other text and graphics. Other materials may alternatively be used such as lexan, mylar or other suitable film materials. Other label thicknesses are also possible, as will be appreciated by a person skilled in the art.

Because the pull tab 76 is integrated into the label 70 in a single piece of material, the connection between the pull tab 76 and the label 70 is strong. There is no concern about the structural integrity of a joint between two separate pieces.

To physically couple the label 70 to the battery pack 30, the front portion 92 of the label 70 is first adhered to the exposed surface 52 of the battery pack 48. Then, securing tabs 64, 66 are folded about their respective bending areas 80, 88, 82, 90 and adhered to the first end 56 and second end 55, respectively, and the underside surface 54 of the battery pack 48. Once the securing tabs 64, 66 are in place, the back portion 94 of the label 70 is adhered to the underside surface 54 of the battery pack 48 covering a portion of the securing tabs 64, 66. Pull tab 76 is then folded about the first and second pull tab folding areas 84, 86 and a free end 96 of the pull tab 76 is folded back onto the pull tab 76, as shown in Figure 5. The pull tab 76 includes an adhesive portion 79, which is provided by a portion of second side 75 that is exposed at the location of the aperture 77. The pull tab 76 projects beyond the front portion 92 in generally the same plane as end 56 when installed. Prior to installing the battery cover 50, the pull tab 76 is folded toward the battery pack 48. Adhesive portion 79 allows the pull tab 76 to adhere temporarily to the battery pack 48 so that the pull tab 76 does not get caught by the battery cover 50.

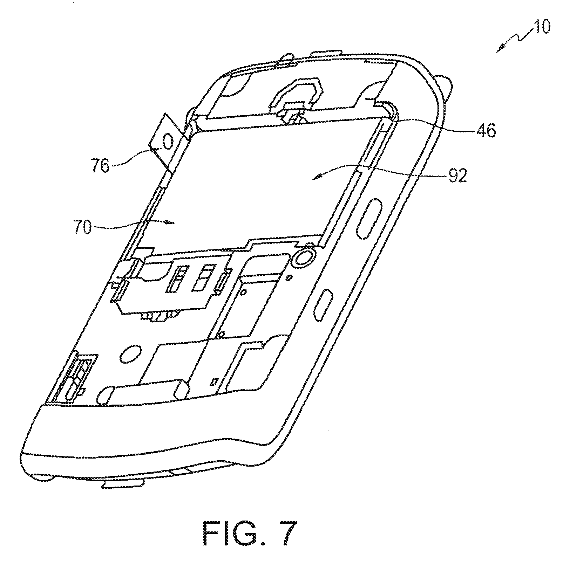

In operation, the battery cover 50 is removed to reveal the battery pack 48 including the label 70, which is received in the cavity 46 of the portable electronic device 10, as shown in Figure 7. The user may then remove the battery pack 48 by grasping the pull tab 76 with their fingers and pulling to battery pack 48 out of the cavity 46. In the embodiment depicted in Figure 7, the pull tab 76 is deployed proximate to a corner of the battery pack 48. In some embodiments of the battery pack 48, the pull tab 76 is offset from the center of mass of the battery pack 48, or is offset from the structures in or near the cavity 46 that may hold the battery pack 48 in place. In other words, the pull tab 76 may be offset from an axis extending lengthwise or widthwise through the center of mass. In such a case, pulling the pull tab 76 may impart a torque or twisting force to the battery pack 48, which may assist in removal.

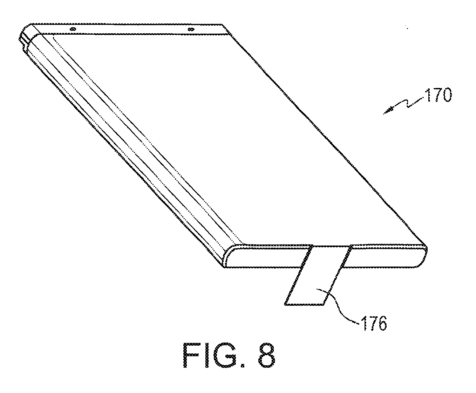

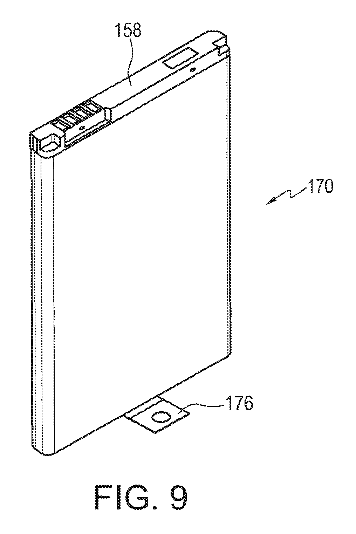

Referring to Figures 8 and 9, another embodiment of a battery pack 148 is shown. The battery pack 148 is sized to fit into another embodiment of a portable electronic device. In this embodiment, a terminal plate 158 is provided on a short side of the battery pack. Front and back portions of a label 170 are adhered to the battery pack 148. The label 70 includes a pull tab 176 that is located opposite to the terminal plate 158. In this embodiment, no securing tabs are provided.

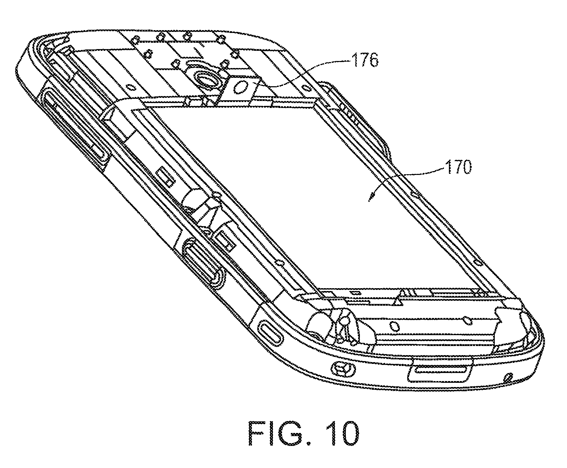

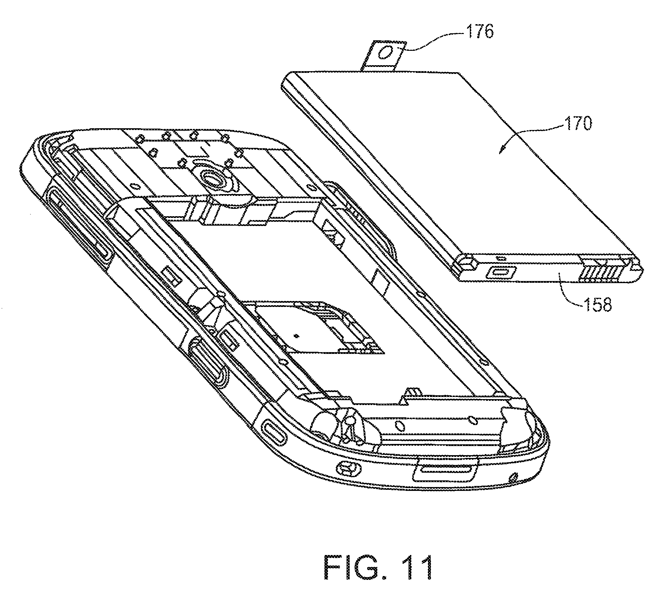

Referring to Figures 10 and 11, removal of the battery pack 148 is achieved by removing the battery cover and pulling on the user-graspable pull tab 176 to remove the battery pack 148 from the portable electronic device 100. As shown in Figure 11, removal of the battery pack allows for replacement of the SIM card, for example.

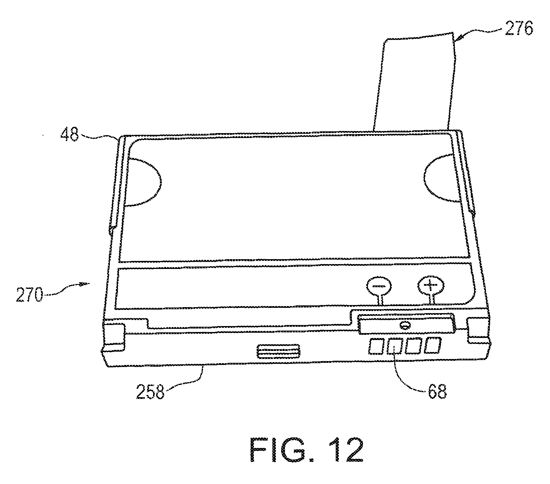

Referring to Figure 12, another embodiment of a label 270 is shown. In this embodiment, the label 270 includes two separate parts: a front part and a back part. A pull tab 276 is coupled to the back part to project from a first end opposite the terminal plate 258. Operation of the label 270 to remove the battery pack from the portable electronic device is achieved by the user grasping the pull tab 276 and pulling the battery pack out of the portable electronic device.

It will be appreciated by a person skilled in the art that the label 70 is not limited to the embodiments disclosed herein. For example, the label 70 may be cut from a piece of material in such a way as to move the location of the pull tab 76 so that it is adjacent any one of the first side 62, terminal plate 58, first end 56 or second end 55 at any location therealong. Further, more that one pull tab 76 may be provided. A pair of opposed pull tabs 76 may further facilitate removal of the battery pack 48.

In one embodiment, the label 70 is made of more than one piece of material. For example, the securing tabs 64, 66 may be separate pieces of material that are secured to the second side 75 of the label 70 following installation of the label 70. Alternatively, the front portion 92 and back portion 94 may be separate pieces that overlap to form the label 70.

In another embodiment, the securing tabs are omitted from the label 70. In yet another embodiment, the front 92 and back 94 portions of the label 70 cover a reduced area of the surfaces 52, 54 of the battery pack 48.

In another embodiment, the pull tab 76 includes a "tear-away" feature to allow a user who finds the pull tab 76 to be bothersome to easily remove the pull tab 76. The tear-away feature may be a perforated joint, for example, or another feature that allows for removal of the pull tab 76 without the use of a tool. It will be appreciated by a person skilled in the art that any such feature would be selected to maintain the performance of the pull tab 76, when intact.

Most battery packs are provided with a label to convey battery information, branding information and/or other information to the user. By integrating the pull tab into the label, an existing part is now able to perform two functions: providing information and facilitating battery removal, which may reduce cost as well as reduce manufacturing time.

Another potential advantage of the label 70 is that the pull tab 76 includes an adhesive portion 79 that temporarily maintains the pull tab 76 in generally the same plane as the battery pack so that the pull tab 76 does not interfere with the battery cover 50.

Yet another potential advantage of the label 70 is that the size of the battery pack 48 can be enlarged because there is no portion of the battery pack volume that is dedicated to accommodating fingernail recesses. In addition, the cavity 46 of the portable electronic device does not need to include similar features to allow for battery removal access. Further, the label 70 does not significantly increase the thickness of the battery pack 48.

Still another potential advantage of the label is that it may be used with any battery pack 48.

Specific embodiments have been shown and described herein. However, modifications and variations may occur to those skilled in the art. All such modifications and variations are believed to be within the scope of the present embodiments.

## Claims

1. A device comprising:
a power pack body (49) comprising a pair of opposed surfaces (52, 54) separated by sides (55, 56, 60, 62) having a thickness;
a terminal plate (58) located on one of the sides (55, 56, 60, 62) of the power pack (30), the terminal plate (58) covering a part of a printed circuit board, the printed circuit board for electrically connecting the power pack body (49) to a portable electronic device (10) to provide power to the portable electronic device (10); and
a label (70) comprising a label body (71) coupled to an underside surface (54) of the pair of opposed surfaces (52, 54) of the power pack (30) and a pull tab (76) coupled to the label body (71), the pull tab (76) being foldable at a bending area (86) to extend beyond the thickness of the power pack (30) for protruding from a power pack-receiving cavity (46) of the portable electronic device (10).

2. A device as claimed in claim 1, wherein the label body and the pull tab (76) are comprised of the same material.

3. A device as claimed in any of claims 1 to 2, wherein the label (70) is continuous and cut from a single piece of material.

4. A device as claimed in any of claims 1 to 3, wherein the label body comprises a back portion (94) for coupling to the underside surface (54) of the power pack (30) and a front portion (92) for coupling to an exposed surface (52) of the power pack (30) that is visible when a cover (50) of the power pack-receiving a cavity (46) is removed from the portable electronic device (10).

5. A device as claimed in any of claims 1 to 4, wherein the label (70) is comprised of polyester.

6. A device as claimed in any of claims 1 to 5, wherein the label (70) is coupled to the power pack (30) using an adhesive.

7. A device as claimed in any of claims 1 to 6, wherein the power pack (30) is a battery pack (48) comprising at least one battery cell.

8. A device as claimed in any of claims 1 to 7, wherein the pull tab (76) is offset from an axis extending lengthwise through the power pack (30).

## Patentansprüche

1. Eine Vorrichtung, die aufweist:
einen Leistungsversorgungspaketkörper (49), der ein Paar von gegenüberliegenden Flächen (52, 54) aufweist, die durch Seiten (55, 56, 60, 62) mit einer Dicke getrennt sind;
eine Anschlussplatte (58), die sich an einer der Seiten (55, 56, 60, 62) des Leistungsversorgungspakets (30) befindet, wobei die Anschlussplatte (58) einen Teil einer Leiterplatte abdeckt, wobei die Leiterplatte vorgesehen ist zur elektrischen Verbindung des Leistungsversorgungspaketkörpers (49) mit einer tragbaren elektronischen Vorrichtung (10), um Leistung für die tragbare elektronische Vorrichtung (10) vorzusehen; und
ein Etikett (70), das einen Etikettkörper (71) aufweist, der mit einer unteren Fläche (54) des Paares von gegenüberliegenden Flächen (52, 54) des Leistungsversorgungspakets (30) gekoppelt ist, und eine Ziehlasche (76), die mit dem Etikettkörper (71) gekoppelt ist, wobei die Ziehlasche (76) in einem Biegebereich (86) umgeklappt werden kann, um sich über die Dicke des Leistungsversorgungspakets (30) hinaus zu erstrecken, um aus einer das Leistungsversorgungspaket aufnehmenden Vertiefung (46) der tragbaren elektronischen Vorrichtung (10) herauszuragen.

2. Eine Vorrichtung gemäß Anspruch 1, wobei der Etikettkörper und die Ziehlasche (76) aus demselben Material bestehen.

3. Eine Vorrichtung gemäß einem der Ansprüche 1 bis 2, wobei das Etikett (70) kontinuierlich und aus einem einzigen Stück Material geschnitten ist.

4. Eine Vorrichtung gemäß einem der Ansprüche 1 bis 3, wobei der Etikettkörper einen hinteren Teil (94) aufweist zum Koppeln mit der unteren Fläche (54) des Leistungsversorgungspakets (30) und einen vorderen Teil (92) zum Koppeln mit einer freiliegenden Fläche (52) des Leistungsversorgungspakets (30), die sichtbar ist, wenn eine Abdeckung (50) der das Leistungsversorgungspaket aufnehmenden Vertiefung (46) von der tragbaren elektronischen Vorrichtung (10) entfernt wird.

5. Eine Vorrichtung gemäß einem der Ansprüche 1 bis 4, wobei das Etikett (70) aus Polyester besteht.

6. Eine Vorrichtung gemäß einem der Ansprüche 1 bis 5, wobei das Etikett (70) unter Verwendung eines Klebstoffs an das Leistungsversorgungspaket (30) gekoppelt ist.

7. Eine Vorrichtung gemäß einem der Ansprüche 1 bis 6, wobei das Leistungsversorgungspaket (30) ein Batteriepaket (48) ist, das zumindest eine Batteriezelle aufweist.

8. Eine Vorrichtung gemäß einem der Ansprüche 1 bis 7, wobei die Ziehlasche (76) von einer Achse versetzt ist, die sich in Längsrichtung durch das Leistungsversorgungspaket (30) erstreckt.

## Revendications

1. Dispositif comprenant :
un corps de bloc d'alimentation (49) comprenant une paire de surfaces opposées (52, 54) séparées par des côtés (55, 56, 60, 62) ayant une épaisseur ;
une plaque à bornes (58) positionnée sur l'un des côtés (55, 56, 60, 62) du bloc d'alimentation (30), la plaque à bornes (58) recouvrant une partie d'une carte de circuit imprimé, la carte de circuit imprimé étant prévue pour connecter électriquement le corps de bloc d'alimentation (49) à un dispositif électronique portable (10) afin de fournir la puissance au dispositif électronique portable (10) ; et
une étiquette (70) comprenant un corps d'étiquette (71) couplé à une surface inférieure (54) de la paire de surfaces opposées (52, 54) du bloc d'alimentation (30) et une languette de traction (76) couplée au corps d'étiquette (71), la languette de traction (76) étant pliable au niveau d'une zone de flexion (86) pour s'étendre au-delà de l'épaisseur du bloc d'alimentation (30) pour faire saillie d'une cavité de réception de bloc d'alimentation (46) du dispositif électronique portable (10).

2. Dispositif selon la revendication 1, dans lequel le corps d'étiquette et la languette de traction (76) sont composés avec le même matériau.

3. Dispositif selon l'une quelconque des revendications 1 et 2, dans lequel l'étiquette (70) est continue et coupée à partir d'un seul morceau de matériau.

4. Dispositif selon l'une quelconque des revendications 1 à 3, dans lequel le corps d'étiquette comprend une partie arrière (94) pour se coupler à la surface inférieure (54) du bloc d'alimentation (30) et une partie avant (92) pour se coupler à une surface exposée (52) du bloc d'alimentation (30) qui est visible lorsqu'un couvercle (50) de la cavité de réception de bloc d'alimentation (46) est retiré du dispositif électronique portable (10).

5. Dispositif selon l'une quelconque des revendications 1 à 4, dans lequel l'étiquette (70) est composée de polyester.

6. Dispositif selon l'une quelconque des revendications 1 à 5, dans lequel l'étiquette (70) est couplée au bloc d'alimentation (30) à l'aide d'un adhésif.

7. Dispositif selon l'une quelconque des revendications 1 à 6, dans lequel le bloc d'alimentation (30) est un bloc batterie (48) se composant d'au moins une pile.

8. Dispositif selon l'une quelconque des revendications 1 à 7, dans lequel la languette de traction (76) est décalée d'un axe s'étendant dans le sens de la longueur en passant par le bloc d'alimentation (30).
